# EUROPEAN PATENT APPLICATION

(11) **EP 4 382 006 A1**
(43) Date of publication of application: **12.06.2024**
(21) Application number: 23161641.8
(22) Date of filing: 14.03.2023
(51) Int. Cl.: A47J 31/06

(54) **BREWING DEVICE AND WATER SUPPLY MECHANISM THEREOF**

(30) Priority: 08.12.2022 TW 111213542 U
(71) Applicant: Klub Technology Corp., Taoyuan City 325 (TW)
(72) Inventor: Yang, Yen-Pin, 330 Taoyuan City (TW)
(74) Representative: Straus, Alexander

(57) **Abstract**

A brewing device (1) includes a casing (10) and a water supply mechanism (12). The water supply mechanism (12) includes a ball plate (120, 120'), a rotating base (122), a driving module (124), a linkage base (126), a ball (128), a linkage rod (130), a pivot (132), a water supply nozzle (134) and a fixing rod (136). The rotating base (122) is disposed at a side of the ball plate (120, 120'). The driving module (124) is connected to the rotating base (122). The ball (128) is disposed on the linkage base (126) and abuts against a track (1200, 1200') of the ball plate (120, 120'). The linkage rod (130) is pivotally connected to the linkage base (126) by the pivot (132). The water supply nozzle (134) is connected to the linkage rod (130). The fixing rod (136) is disposed in a longitudinal groove (1304) of the linkage rod (130).

## Description

### Field of the Invention

The present invention relates to a brewing device and a water supply mechanism thereof, particularly a water supply mechanism capable of driving a water supply nozzle to generate a specific motion (e.g. swirl motion) and a brewing device equipped with the water supply mechanism.

### Background of the Invention

In general, hand-brewing coffee is made by manually pouring hot water from a hand-brewing pot into a filter cup, wherein the filter cup has been placed with moderately ground coffee powder. When manually pouring hot water with appropriate temperature into the filter cup, the coffee is brewed by pouring water in a swirl motion from the center of the filter cup outwards. After the amount of water reaches the required amount, the coffee brewing pauses for a while, such that the hot water can fully mix with the coffee powder, dissolve and extract the essence of the coffee powder. After repeating the aforesaid manner several times, delicious coffee can be brewed. Compared with the conventional coffee machine, the hand-brewing coffee allows a user to taste the original taste of coffee. Thus, how to drive a water supply nozzle to generate a swirl motion to simulate hand-brewing manner has become a significant design issue for a brewing device.

### Summary of the Invention

The present invention aims at providing a water supply mechanism capable of driving a water supply nozzle to generate a specific motion (e.g. swirl motion) and a brewing device equipped with the water supply mechanism, thereby resolving the aforesaid problems.

This is achieved by a brewing device according to claim 1 and a water supply mechanism according to claim 9. The dependent claims pertain to corresponding further developments and improvements.

As will be seen more clearly from the detailed description following below, the claimed brewing device includes a casing and a water supply mechanism. The water supply mechanism is disposed in the casing. The water supply mechanism includes a ball plate, a rotating base, a driving module, a linkage base, a ball, a linkage rod, a pivot, a water supply nozzle and a fixing rod. The ball plate has a track. The rotating base is disposed at a side of the ball plate. The driving module is connected to the rotating base. The linkage base is slidably disposed on the rotating base. The ball is disposed on the linkage base and abuts against the track. The linkage rod has a first end, a second end and a longitudinal groove, wherein the longitudinal groove is located between the first end and the second end. The first end of the linkage rod is pivotally connected to the linkage base by the pivot. The water supply nozzle is connected to the second end of the linkage rod. An end of the fixing rod is disposed in the longitudinal groove of the linkage rod.

As will be seen more clearly from the detailed description following below, the claimed water supply mechanism includes a ball plate, a rotating base, a driving module, a linkage base, a ball, a linkage rod, a pivot, a water supply nozzle and a fixing rod. The ball plate has a track. The rotating base is disposed at a side of the ball plate. The driving module is connected to the rotating base. The linkage base is slidably disposed on the rotating base. The ball is disposed on the linkage base and abuts against the track. The linkage rod has a first end, a second end and a longitudinal groove, wherein the longitudinal groove is located between the first end and the second end. The first end of the linkage rod is pivotally connected to the linkage base by the pivot. The water supply nozzle is connected to the second end of the linkage rod. An end of the fixing rod is disposed in the longitudinal groove of the linkage rod.

### Brief Description of the Drawings

In the following, the invention is further illustrated by way of example, taking reference to the accompanying drawings thereof:
FIG. 1 is a perspective view illustrating a brewing device according to an embodiment of the invention,
FIG. 2 is an internal view illustrating the brewing device shown in FIG. 1,
FIG. 3 is a perspective view illustrating a water supply mechanism shown in FIG. 2, wherein the linkage base is located at a motion start position,
FIG. 4 is a perspective view illustrating the water supply mechanism shown in FIG. 3 from another viewing angle,
FIG. 5 is a top view illustrating the water supply mechanism shown in FIG. 3,
FIG. 6 is a perspective view illustrating the linkage base shown in FIG. 3 from another viewing angle,
FIG. 7 is an exploded view illustrating the linkage base shown in FIG. 6,
FIG. 8 is a perspective view illustrating a ball plate shown in FIG. 3,
FIG. 9 is a perspective view illustrating the linkage base shown in FIG. 3 being located at a motion end position,
FIG. 10 is a top view illustrating the water supply mechanism shown in FIG. 9, and
FIG. 11 is a perspective view illustrating another ball plate according to an embodiment of the invention.

### Detailed Description

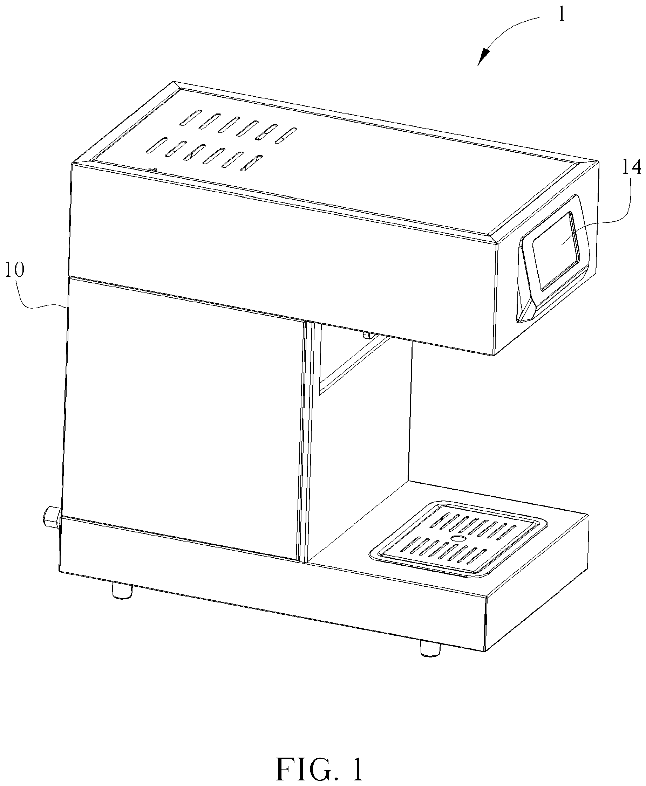

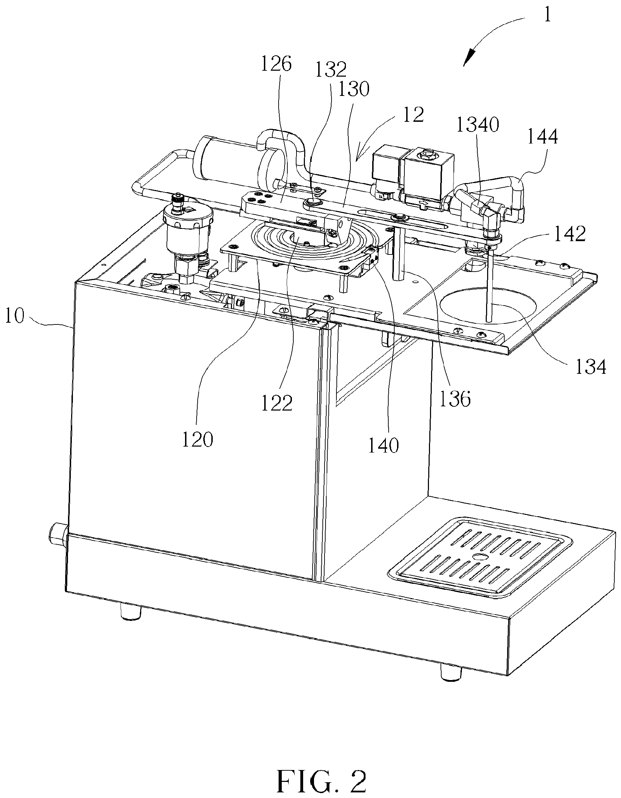

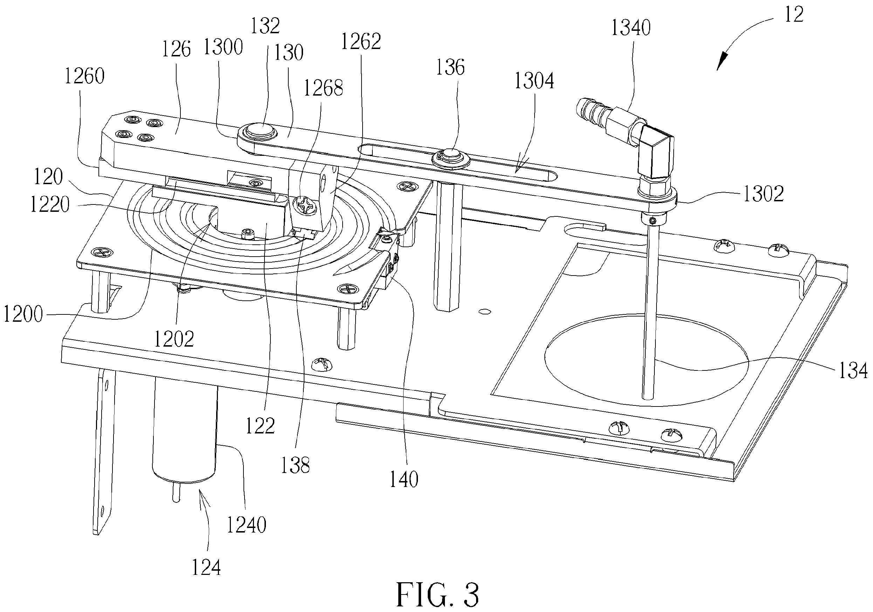

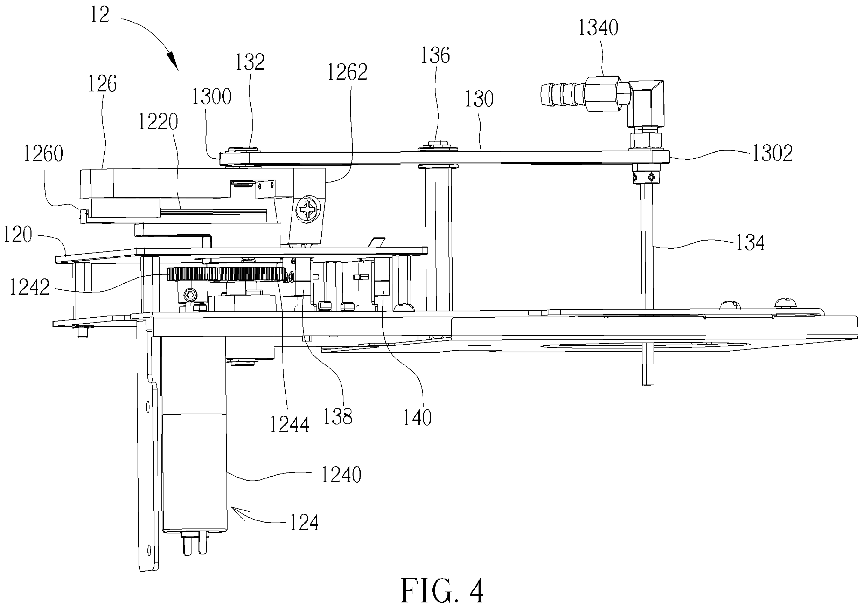

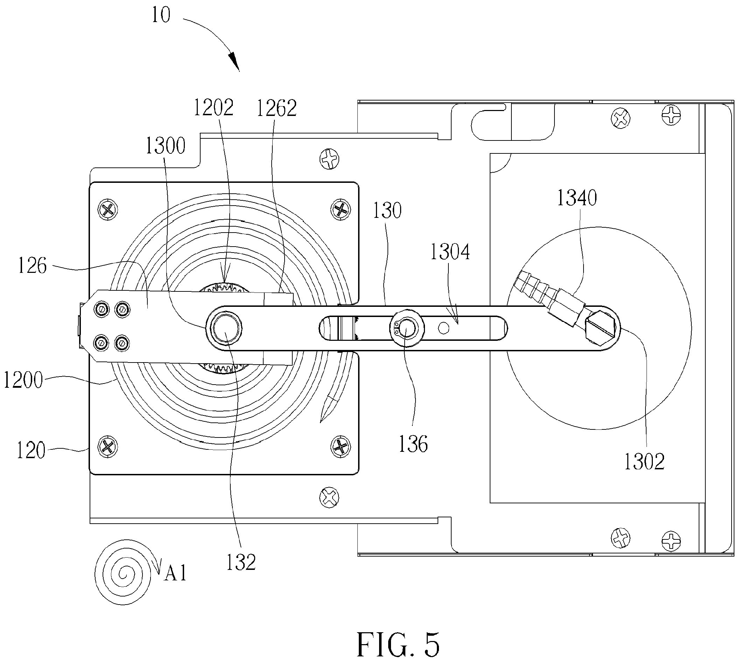

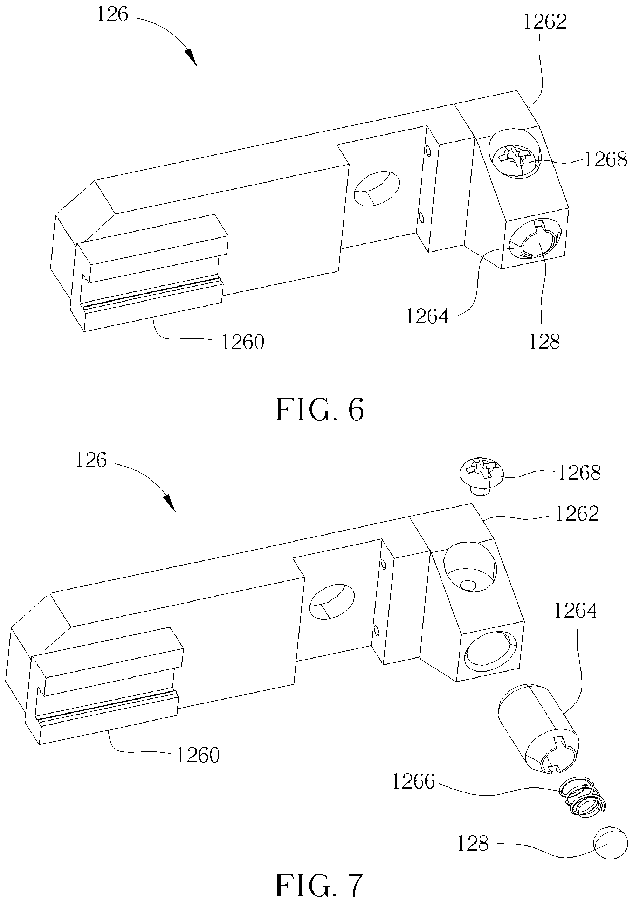

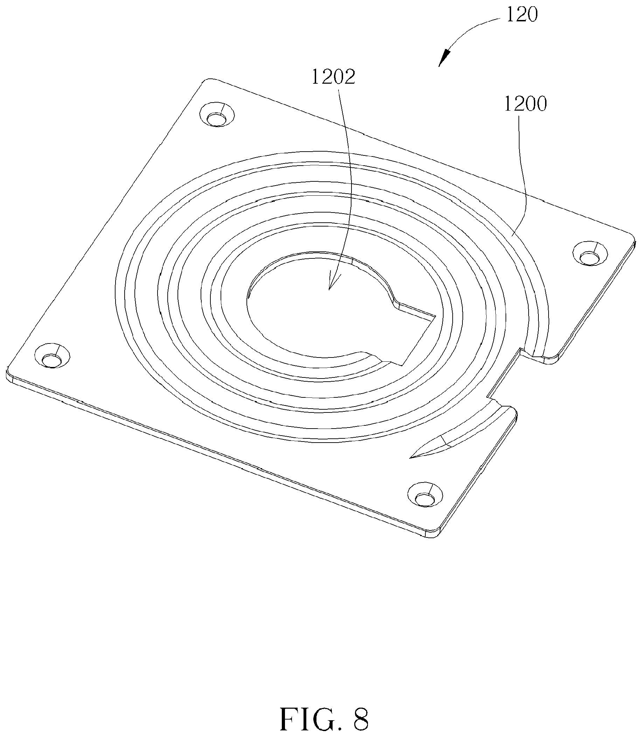

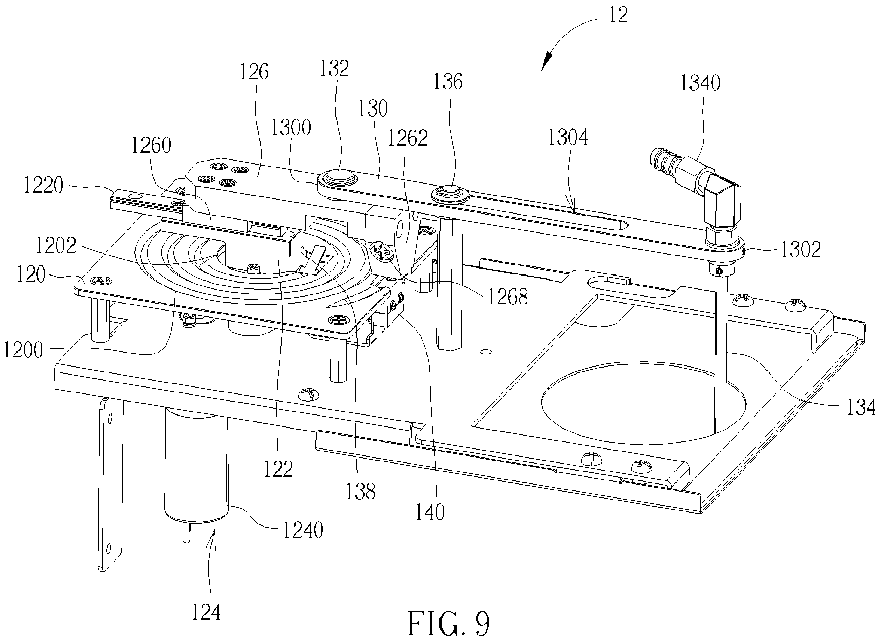

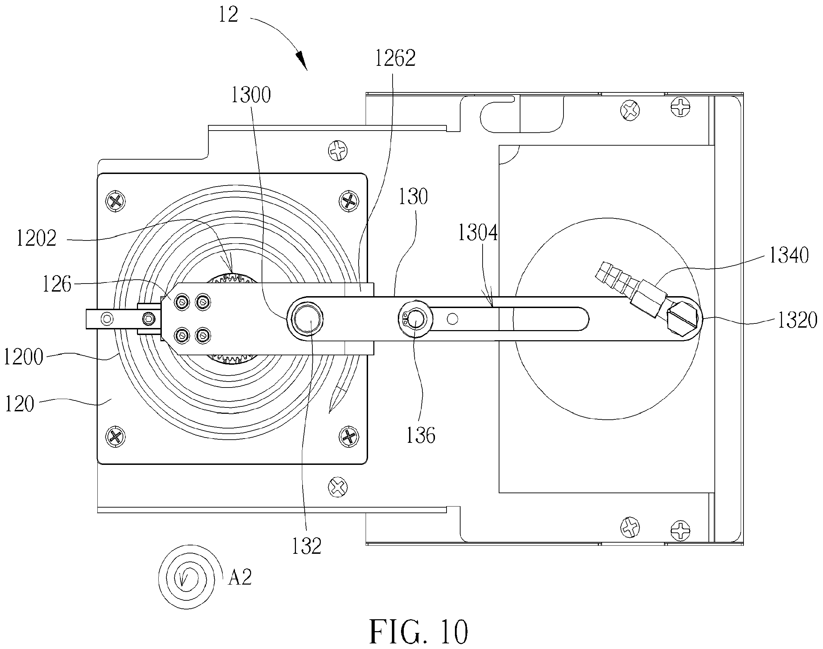

Referring to FIGs. 1 to 10, FIG. 1 is a perspective view illustrating a brewing device 1 according to an embodiment of the invention, FIG. 2 is an internal view illustrating the brewing device 1 shown in FIG. 1, FIG. 3 is a perspective view illustrating a water supply mechanism 12 shown in FIG. 2, wherein the linkage base 126 is located at a motion start position, FIG. 4 is a perspective view illustrating the water supply mechanism 12 shown in FIG. 3 from another viewing angle, FIG. 5 is a top view illustrating the water supply mechanism 12 shown in FIG. 3, FIG. 6 is a perspective view illustrating the linkage base 126 shown in FIG. 3 from another viewing angle, FIG. 7 is an exploded view illustrating the linkage base 126 shown in FIG. 6, FIG. 8 is a perspective view illustrating a ball plate 120 shown in FIG. 3, FIG. 9 is a perspective view illustrating the linkage base 126 shown in FIG. 3 being located at a motion end position, and FIG. 10 is a top view illustrating the water supply mechanism 12 shown in FIG. 9.

As shown in FIGs. 1 and 2, the brewing device 1 includes a casing 10 and a water supply mechanism 12, wherein the water supply mechanism 12 is disposed in the casing 10. In this embodiment, the brewing device 1 may be used to brew coffee, tea or other drinks according to practical applications. In practical applications, a user interface 14 (e.g. touch panel, button, etc.) for operating the brewing device 1 may be arranged in front of the casing 10. In general, the brewing device 1 may be further equipped with some necessary hardware and software components for specific purposes, such as controller, circuit board, memory, power supply, applications, input/output interface, etc., and it depends on practical applications.

As shown in FIGs. 2 to 10, the water supply mechanism 12 includes a ball plate 120, a rotating base 122, a driving module 124, a linkage base 126, a ball 128, a linkage rod 130, a pivot 132, a water supply nozzle 134, a fixing rod 136, a first micro switch 138, a second micro switch 140 and a water control valve 142.

The ball plate 120 is fixed in the casing 10 and has a track 1200. In this embodiment, the track 1200 may be swirl to generate a swirl motion for the water supply nozzle 134, but the invention is not so limited. The rotating base 122 is disposed at a side of the ball plate 120. In this embodiment, an end of the rotating base 122 may be disposed in a hole 1202 at the center of the ball plate 120, but the invention is not so limited. The driving module 124 is connected to the rotating base 122. In this embodiment, the driving module 124 may include a motor 1240, a first gear 1242 and a second gear 1244, wherein the first gear 1242 is connected to the motor 1240, the second gear 1244 is connected to the rotating base 122, and the first gear 1242 meshes with the second gear 1244. Accordingly, when the motor 1240 is actuated, the motor 1240 drives the first gear 1242 to rotate and the first gear 1242 drives the second gear 1244 to rotate, so as to drive the rotating base 122 to rotate.

The linkage base 126 is slidably disposed on the rotating base 122. In this embodiment, the rotating base 122 may include a rail 1220 and the linkage base 126 may include a sliding block 1260. The sliding block 1260 is slidably disposed on the rail 1220, such that the linkage base 126 is slidably disposed on the rotating base 122. Accordingly, the linkage base 126 is able to slide forward and backward with respect to the rotating base 122. The ball 128 is disposed on the linkage base 126 and abuts against the track 1200 of the ball plate 120. In this embodiment, the linkage base 126 may include a fixing member 1262, a sleeve 1264, an elastic member 1266 and an adjusting member 1268. As shown in FIGs. 6 and 7, the sleeve 1264 is disposed in the fixing member 1262 and the elastic member 1266 is disposed in the sleeve 1264. In this embodiment, the elastic member 1266 may be, but is not limited to, a spring. The ball 128 is disposed at an end of the sleeve 1264 and abuts against the elastic member 1266. When the ball 128 rolls along the track 1200 of the ball plate 120, an elastic force provided by the elastic member 1266 will force the ball 128 to keep abutting against the track 1200. The adjusting member 1268 is disposed at a side of the fixing member 1262. The adjusting member 1268 is configured to restrain or release the sleeve 1264 to adjust a contact state between the ball 128 and the track 1200. In this embodiment, the adjusting member 1268 may be, but is not limited to, a screw. A user may rotate the adjusting member 1268 to release the sleeve 1264. Then, the user may move the sleeve 1264 inward and outward with respect to the fixing member 1262 to adjust the contact state between the ball 128 and the track 1200. After adjusting the contact state between the ball 128 and the track 1200, the user may rotate the adjusting member 1268 to restrain the sleeve 1264.

The linkage rod 130 has a first end 1300, a second end 1302 and a longitudinal groove 1304, wherein the longitudinal groove 1304 is located between the first end 1300 and the second end 1302. The first end 1300 of the linkage rod 130 is pivotally connected to the linkage base 126 by the pivot 132. The water supply nozzle 134 is connected to the second end 1302 of the linkage rod 130. An end of the fixing rod 136 is disposed in the longitudinal groove 1304 of the linkage rod 130. The first micro switch 138 is disposed at a motion start position of the linkage base 126 (as shown in FIGs. 3 and 4), and the second micro switch 140 is disposed at a motion end position of the linkage base 126 (as shown in FIG. 9). The water control valve 142 is connected to a water inlet 1340 of the water supply nozzle 134. In this embodiment, the water control valve 142 may be connected to the water inlet 1340 of the water supply nozzle 134 by a tube 144. The water control valve 142 is configured to control the water output of the water supply nozzle 134.

When a user wants to use the brewing device 1 to brew coffee, tea or other drinks, the user may place a container that has been filled with coffee powder, tea leaves or other substances under the water supply nozzle 134 and then operate the user interface 14 of the brewing device 1 to actuate the motor 1240 of the driving module 124. It should be noted that, before actuating the motor 1240, the rotating base 122 and the linkage base 126 are located at a motion start position shown in FIGs. 3 and 4. When the motor 1240 of the driving module 124 is actuated, an output shaft of the motor 1240 may rotate counterclockwise to drive the first gear 1242 to rotate counterclockwise. Then, the first gear 1242 drives the second gear 1244 to rotate clockwise to drive the rotating base 122 to rotate clockwise. At this time, the rotating base 122 drives the linkage base 126 to rotate clockwise, such that the ball 128 rolls clockwise along the track 1200 of the ball plate 120. At the same time, the linkage base 126 slides forward with respect to the rotating base 122. Then, the linkage base 126 drives the linkage rod 130 to reciprocate with respect to the fixing rod 136 within the longitudinal groove 1304 through the pivot 132, so as to drive the water supply nozzle 134 to generate a swirl motion indicated by an arrow A1 in FIG. 5 (e.g. from inside to outside).

When the ball 128 rotates with the linkage rod 126 to a motion end position shown in FIG. 9 and triggers the second micro switch 140, the output shaft of the motor 1240 will be reversed (i.e. rotate clockwise) to drive the first gear 1242 to rotate clockwise. Then, the first gear 1242 drives the second gear 1244 to rotate counterclockwise to drive the rotating base 122 to rotate counterclockwise. At this time, the rotating base 122 drives the linkage base 126 to rotate counterclockwise, such that the ball 128 rolls counterclockwise along the track 1200 of the ball plate 120. At the same time, the linkage base 126 slides backward with respect to the rotating base 122. Then, the linkage base 126 drives the linkage rod 130 to reciprocate with respect to the fixing rod 136 within the longitudinal groove 1304 through the pivot 132, so as to drive the water supply nozzle 134 to generate a swirl motion indicated by an arrow A2 in FIG. 10 (e.g. from outside to inside). When the ball 128 rotates with the linkage rod 126 to the motion start position shown in FIGs. 3 and 4 and triggers the first micro switch 138, the output shaft of the motor 1240 will stop.

When the water supply nozzle 134 generates the aforesaid swirl motion, the water control valve 142 is opened simultaneously, such that the water supply nozzle 134 is able to simulate hand-brewing manner to brew coffee, tea or other drinks by swirl motion, so as to brew delicious coffee, tea or other drinks. It should be noted that the brewing device 1 of the invention may be connected to a built-in or external water tank and the water tank is connected to the water control valve 142 by a tube, so as to supply the amount of water required for brewing.

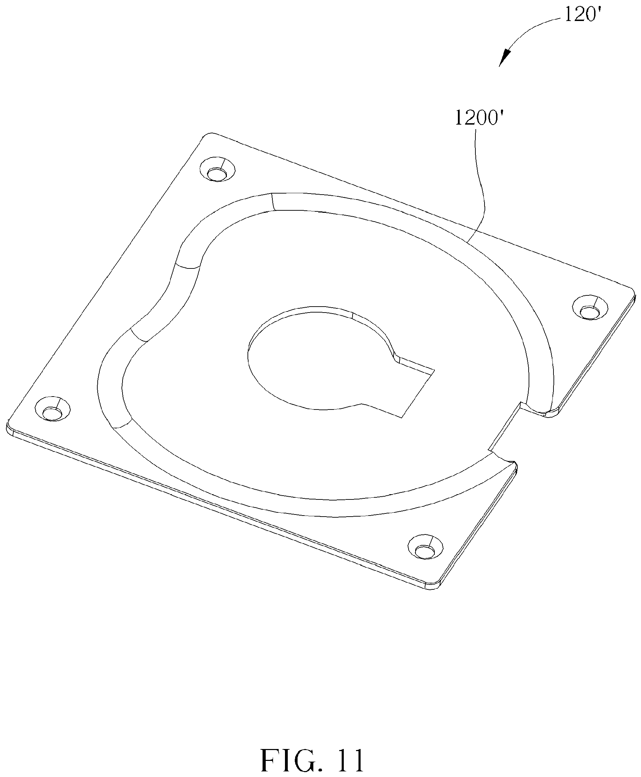

Referring to FIG. 11, FIG. 11 is a perspective view illustrating another ball plate 120' according to an embodiment of the invention. The aforesaid ball plate 120 may be replaced by another ball plate 120' with a track 1200' in other shapes (e.g. heart-shaped), as shown in FIG. 11. Accordingly, after brewing coffee, the brewing device of the invention may further utilize another ball plate 120' to form a latte art on the coffee correspondingly. In practical applications, the ball plate 120' may be installed in another brewing device to avoid the inconvenience of replacing the ball plate.

As mentioned in the above, when the driving module is actuated, the driving module drives the rotating base to rotate. At this time, the rotating base drives the linkage base to rotate and slide with respect to the rotating base, such that the ball rolls along the track of the ball plate. Then, the linkage base drives the linkage rod to reciprocate with respect to the fixing rod within the longitudinal groove through the pivot. For example, the track of the ball plate may be swirl. Accordingly, the brewing device of the invention may simulate hand-brewing manner to brew coffee, tea or other drinks by swirl motion, so as to brew delicious coffee, tea or other drinks. Furthermore, the ball plate may be replaced by another ball plate with a track in other shapes (e.g. heart-shaped). Accordingly, after brewing coffee, the brewing device of the invention may further utilize another ball plate to form a latte art with specific pattern on the coffee.

## Claims

1. A brewing device (1) **characterized by** the brewing device (1) comprising:
a casing (10); and
a water supply mechanism (12) disposed in the casing (10), the water supply mechanism (12) comprising:
a ball plate (120, 120') having a track (1200, 1200');
a rotating base (122) disposed at a side of the ball plate (120, 120');
a driving module (124) connected to the rotating base (122);
a linkage base (126) slidably disposed on the rotating base (122);
a ball (128) disposed on the linkage base (126) and abutting against the track (1200, 1200');
a linkage rod (130) having a first end (1300), a second end (1302) and a longitudinal groove (1304), the longitudinal groove (1304) being located between the first end (1300) and the second end (1302);
a pivot (132), the first end (1300) of the linkage rod (130) being pivotally connected to the linkage base (126) by the pivot (132);
a water supply nozzle (134) connected to the second end (1302) of the linkage rod (130); and
a fixing rod (136), an end of the fixing rod (136) being disposed in the longitudinal groove (1304) of the linkage rod (130).

2. The brewing device (1) of claim 1 further **characterized in that** the track (1200) is swirl to generate a swirl motion for the water supply nozzle (134).

3. The brewing device (1) of claim 1 further **characterized in that** the rotating base (122) comprises a rail (1220), the linkage base (126) comprises a sliding block (1260), and the sliding block (1260) is slidably disposed on the rail (1220).

4. The brewing device (1) of claim 1 further **characterized in that** the linkage base (126) comprises a fixing member (1262), a sleeve (1264) and an elastic member (1266), the sleeve (1264) is disposed in the fixing member (1262), the elastic member (1266) is disposed in the sleeve (1264), and the ball (128) is disposed at an end of the sleeve (1264) and abuts against the elastic member (1266).

5. The brewing device (1) of claim 4 further **characterized in that** the linkage base (126) further comprises an adjusting member (1268) disposed at a side of the fixing member (1262), and the adjusting member (1268) is configured to restrain or release the sleeve (1264) to adjust a contact state between the ball (128) and the track (1200, 1200').

6. The brewing device (1) of claim 1 further **characterized in that** the driving module (124) comprises a motor (1240), a first gear (1242) and a second gear (1244), the first gear (1242) is connected to the motor (1240), the second gear (1244) is connected to the rotating base (122), and the first gear (1242) meshes with the second gear (1244).

7. The brewing device (1) of claim 1 further **characterized in that** the water supply mechanism (12) further comprises a first micro switch (138) and a second micro switch (140), the first micro switch (138) is disposed at a motion start position of the linkage base (126), and the second micro switch (140) is disposed at a motion end position of the linkage base (126).

8. The brewing device (1) of claim 1 further **characterized in that** the water supply mechanism (12) further comprises a water control valve (142) connected to a water inlet (1340) of the water supply nozzle (134).

9. A water supply mechanism (12) **characterized by** the water supply mechanism (12) comprises:
a ball plate (120, 120') having a track (1200, 1200');
a rotating base (122) disposed at a side of the ball plate (120, 120');
a driving module (124) connected to the rotating base (122);
a linkage base (126) slidably disposed on the rotating base (122);
a ball (128) disposed on the linkage base (126) and abutting against the track (1200, 1200');
a linkage rod (130) having a first end (1300), a second end (1302) and a longitudinal groove (1304), the longitudinal groove (1304) being located between the first end (1300) and the second end (1302);
a pivot (132), the first end (1300) of the linkage rod (130) being pivotally connected to the linkage base (126) by the pivot (132);
a water supply nozzle (134) connected to the second end (1302) of the linkage rod (130); and
a fixing rod (136), an end of the fixing rod (136) being disposed in the longitudinal groove (1304) of the linkage rod (130).

10. The water supply mechanism (12) of claim 9 further **characterized in that** the track (1200) is swirl to generate a swirl motion for the water supply nozzle (134).

11. The water supply mechanism (12) of claim 9 further **characterized in that** the rotating base (122) comprises a rail (1220), the linkage base (126) comprises a sliding block (1260), and the sliding block (1260) is slidably disposed on the rail (1220).

12. The water supply mechanism (12) of claim 9 further **characterized in that** the linkage base (126) comprises a fixing member (1262), a sleeve (1264) and an elastic member (1266), the sleeve (1264) is disposed in the fixing member (1262), the elastic member (1266) is disposed in the sleeve (1264), and the ball (128) is disposed at an end of the sleeve (1264) and abuts against the elastic member (1266).

13. The water supply mechanism (12) of claim 12 further **characterized in that** the linkage base (126) further comprises an adjusting member (1268) disposed at a side of the fixing member (1262), and the adjusting member (1268) is configured to restrain or release the sleeve (1264) to adjust a contact state between the ball (128) and the track (1200, 1200').

14. The water supply mechanism (12) of claim 9 further **characterized in that** the driving module (124) comprises a motor (1240), a first gear (1242) and a second gear (1244), the first gear (1242) is connected to the motor (1240), the second gear (1244) is connected to the rotating base (122), and the first gear (1242) meshes with the second gear (1244).

15. The water supply mechanism (12) of claim 9 further **characterized in that** the water supply mechanism (12) further comprises a first micro switch (138) and a second micro switch (140), the first micro switch (138) is disposed at a motion start position of the linkage base (126), and the second micro switch (140) is disposed at a motion end position of the linkage base (126).
